# EUROPÄISCHE PATENTSCHRIFT

(11) **EP 1 101 154 B1**
(45) Veröffentlichungstag und Bekanntmachung des Hinweises auf die Patenterteilung: **26.03.2003**
(21) Anmeldenummer: 99945884.7
(22) Anmeldetag: 02.07.1999
(51) Int. Cl.: G05B 19/042, G05B 19/05

(54) **ELEKTRISCHE STEUEREINRICHTUNG**
ELECTRIC CONTROL DEVICE
UNITE DE COMMANDE ELECTRIQUE

(30) Priorität: 24.07.1998 US 122055
(43) Veröffentlichungstag der Anmeldung: 23.05.2001
(73) Patentinhaber: Infineon Technologies AG, 81669 München (DE)
(72) Erfinder: ROHM, Peter, D-85276 Pfaffenhofen (DE); LETEINTURIER, Patrick, D-81739 München (DE); FLECK, Rod, Bellevue, WA 98006 (US)
(74) Vertreter: Jannig, Peter, Dipl.-Ing.
(86) Internationale Anmeldenummer: DE9902033
(87) Internationale Veröffentlichungsnummer: WO00007080

(56) Entgegenhaltungen:
- EP-A- 0 550 939
- EP-A- 0 837 394
- US-A- 5 510 775

## Beschreibung

Die vorliegende Erfindung betrifft eine Vorrichtung gemäß dem Oberbegriff des Patentanspruchs 1, d.h. eine elektrische Steuereinrichtung zur Erzeugung von Steuersignalen für die Ansteuerung elektrischer Einrichtungen, mit einer Vielzahl von Steuer-Modulen, welche zumindest teilweise einen Vergleicher zum Vergleich zweier Werte aufweisen und abhängig von den jeweiligen Vergleichsergebnissen arbeiten.

Derartige elektrische Steuereinrichtungen sind in unzähligen Ausführungsformen bekannt und werden für die unterschiedlichsten Zwecke verwendet (siehe z.B. US-A-5 510 775).

Durch den Vergleich, in Abhängigkeit von dessen Ergebnis die jeweiligen Steuer-Module arbeiten, soll in den meisten Fällen der Zeitpunkt erfaßt werden, zu dem der Zählstand eines Zählers einen vorbestimmten Wert erreicht. Dies läßt sich im Normalfall dadurch bewerkstelligen, daß bei jeder Veränderung des Zählstandes des Zählers überprüft wird, ob der neue Zählstand gleich dem vorbestimmten Wert ist. Komplizierter wird die Angelegenheit, wenn sich der vorbestimmte Wert ebenfalls verändern kann. Dann muß häufig zusätzlich überprüft werden können, ob der neue Wert größer oder kleiner als der aktuelle Zählstand ist. Dies wiederum hat zur Folge, daß die in den Steuer-Modulen vorgesehenen Vergleicher Größer/Gleich-Vergleicher oder Kleiner/Gleich-Vergleicher sein müssen. Derartige Vergleicher enthalten eine Vielzahl von Bauelementen und sind dementsprechend groß, was insbesondere dann, wenn eine große Anzahl von vergleichsabhängig arbeitenden Steuer-Modulen vorgesehen werden muß, ein ernsthaftes Problem darstellt. Das Vorsehen einer Vielzahl von Steuer-Modulen läßt sich aber kaum verhindern, denn Steuereinrichtungen der eingangs genannten Art müssen immer häufiger in der Lage sein, gleichzeitig eine Vielzahl von Steuersignalen zu erzeugen und auszugeben.

Der vorliegenden Erfindung liegt daher die Aufgabe zugrunde, die elektrische Steuereinrichtung gemäß dem Oberbegriff des Patentanspruchs 1 derart weiterzubilden, daß dieser mit minimalem Aufwand eine maximale Leistungsfähigkeit verliehen werden kann.

Diese Aufgabe wird erfindungsgemäß durch die im kennzeichnenden Teil des Patentanspruchs 1 beanspruchten Merkmale gelöst.

Demnach ist vorgesehen, daß für bestimmte Vergleiche ein oder mehrere, jeweils für mehrere oder alle Steuer-Module arbeitende globale Vergleicher vorgesehen sind, und daß die Steuer-Module dazu ausgelegt sind, zusätzlich in Abhängigkeit von den Vergleichsergebnissen des mindestens einen globalen Vergleichers zu arbeiten.

Dadurch kann die Anzahl derjenigen Vergleicher, deren praktische Realisierung besonders aufwendig ist, also insbesondere die Anzahl der Größer-, Größer/Gleich-, Kleiner- und/oder Kleiner/Gleich-Vergleicher auf ein Minimum reduziert werden.

Daß derartige Vergleicher nicht in allen Steuer-Modulen vorgesehen sind, ist kein oder jedenfalls kein nennenswerter Nachteil, denn
- die Vergleiche, für welche die globalen Vergleicher vorgesehen sind (insbesondere Größer-, Größer/Gleich-, Kleinerund/oder Kleiner/Gleich-Vergleiche), müssen normalerweise nur relativ selten durchgeführt werden, und
- die häufig durchzuführenden Vergleiche (insbesondere die Vergleiche zweier Werte auf Identität) können durch die nach wie vor vorhandenen lokalen Vergleicher der Steuer-Module ausgeführt werden.

Die Beibehaltung der lokalen Vergleicher läßt sich problemlos verkraften, weil diese nur für bestimmte Vergleiche (Vergleiche zweier Werte auf Identität) ausgelegt sein müssen und mithin einfach und klein aufgebaut sein können.

Der elektrischen Steuereinrichtung kann so mit minimalem Aufwand eine maximale Leistungsfähigkeit verliehen werden.

Vorteilhafte Weiterbildungen der Erfindung sind den Unteransprüchen, der folgenden Beschreibung und den Figuren entnehmbar.

Die Erfindung wird nachfolgend anhand eines Ausführungsbeispiels unter Bezugnahme auf die Zeichnung näher erläutert. Es zeigen
Figur 1 schematisch den Aufbau eines Ausführungsbeispiels der erfindungsgemäßen Steuereinrichtung,
Figur 2 schematisch den Aufbau eines in der Steuereinrichtung gemäß Figur 1 enthaltenen Steuer-Moduls, und
Figur 3 schematisch den Aufbau eines in der Steuereinrichtung gemäß Figur 1 enthaltenen globalen Zählers.

Die vorliegend näher betrachtete elektrische Steuereinrichtung ist Bestandteil einer integrierten Schaltung, beispielsweise eines Controllers für den automotiven und/oder industriellen Bereich. Es sei jedoch bereits an dieser Stelle darauf hingewiesen, daß hierauf keine Einschränkung besteht; bei der Steuereinrichtung kann es sich auch um eine unter Verwendung diskreter Elemente aufgebaute Schaltung handeln.

Die Steuereinrichtung ist im vorliegend betrachteten Beispiel dazu ausgelegt, über deren Ausgabeanschlüsse periodische oder nicht periodische Steuersignale zur Ansteuerung beliebiger elektrischer Einrichtungen auszugeben, wobei die ausgegebenen Steuersignale insbesondere (aber nicht unbedingt ausschließlich) unter Berücksichtigung externer Ereignisse, genauer gesagt unter Berücksichtigung von diese Ereignisse repräsentierenden, über die Eingangsanschlüsse der Steuereinrichtung eingegebenen Eingangssignalen erzeugt werden.

Bei der beschriebenen Steuereinrichtung handelt es sich um eine digitale Steuereinrichtung, die in der Lage ist, in den empfangenen Signalen steigende und/oder fallende Flanken und die Zeitpunkte des Auftretens derselben zu erfassen und insbesondere in Abhängigkeit hiervon einzelne steigende oder fallende Flanken in den ausgegebenen Steuersignalen zu erzeugen und/oder periodische Steuersignale zu erzeugen und auszugeben.

Selbstverständlich kann die Steuereinrichtung zusätzlich oder alternativ dazu ausgelegt sein, unter Berücksichtigung der selben oder beliebiger anderer Ereignisse oder Parameter wie erwähnt oder anders zu reagieren.

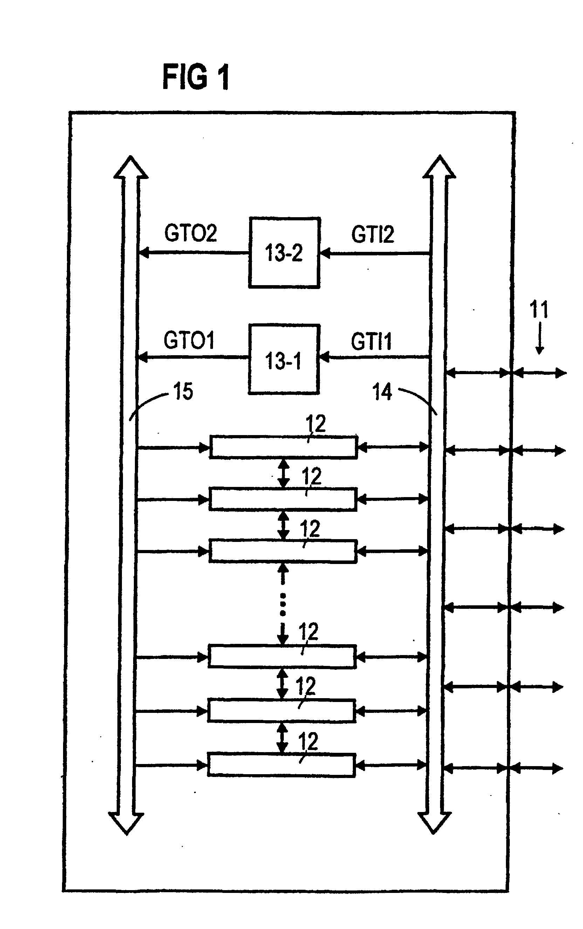

Die nachfolgend näher betrachtete Steuereinrichtung (genauer gesagt die vorliegend interessierenden Bestandteile derselben) ist schematisch in Figur 1 gezeigt.

Sie weist eine Vielzahl von Ein- und/oder Ausgabeanschlüssen 11, eine Vielzahl von nachfolgend noch näher beschriebenen Steuer-Modulen 12, zwei nachfolgend ebenfalls noch näher beschriebene globale Zähler 13-1 und 13-2, eine in den Figuren nicht gezeigte Einstelleinrichtung sowie gegebenenfalls weitere Einrichtungen auf.

Den Steuer-Modulen 12 obliegt es, die von der Steuereinrichtung auszugebenden Steuersignale zu erzeugen und den Einund/oder Ausgabeanschlüssen 11 der Steuereinrichtung zuzuführen; hierzu ist im vorliegend betrachteten Beispiel jedes einzelne der Steuer-Module 12 in der Lage.

Bei den Steuer-Modulen 12 handelt es sich im betrachteten Beispiel um im wesentlichen identische Multifunktions-Module, die unabhängig voneinander wahlweise in einer von mehreren Betriebsarten betrieben werden können.

Die Steuer-Module 12 sind im betrachteten Beispiel untereinander in Reihe verschaltet und über einen ersten Bus 14 und über einen zweiten Bus 15 mit den Ein- und/oder Ausgabeanschlüssen 11, den globalen Zählern 13-1 und 13-2 und der Einstelleinrichtung verbunden.

Zwischen den Steuer-Modulen 12 und den Ein- und/oder Ausgabeanschlüssen 11 kann eine feste oder eine variable (einstellbare bzw. veränderliche) Zuordnung bestehen, wobei nicht jedes Steuer-Modul 12 mit einem Ein- und/oder Ausgabeanschluß 11 verbunden sein muß, und wobei andererseits auch vorgesehen werden kann, einem Steuer-Modul 12 mehrere Ein- und/oder Ausgabeanschlüsse 11 zuzuordnen.

Die einzelnen Steuer-Module sind wahlweise einzeln oder gruppenweise zusammenwirkend betreibbar, wobei die einzelnen Steuer-Modul-Gruppen unabhängig voneinander beliebig viele Steuer-Module umfassen können.

Die Steuer-Module 12 arbeiten zumindest teilweise in Abhängigkeit von Zählständen und Vergleichsergebnissen, die ihnen über den zweiten Bus 15 von den globalen Zählern 13-1 und 13-2 zugeführt werden.

Dabei kann zwischen den einzelnen Steuer-Modulen 12 und den globalen Zählern 13-1 und 13-2 eine feste oder eine variable (einstellbare bzw. veränderliche) Zuordnung bestehen.

Wie die einzelnen Steuer-Module arbeiten, welche Steuer-Module wie zusammenwirkend betrieben werden, welche Steuer-Module welchen Ein- und/oder Ausgabeanschlüssen zugeordnet werden, und welcher globale Zähler welchen Steuer-Modulen zugeordnet wird, ist durch die Einstelleinrichtung einstellbar.

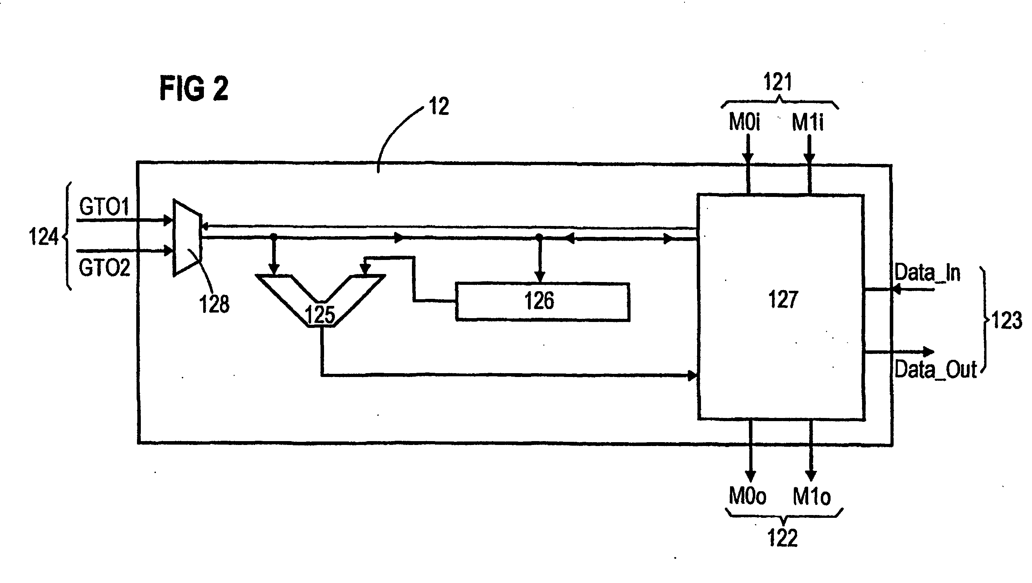

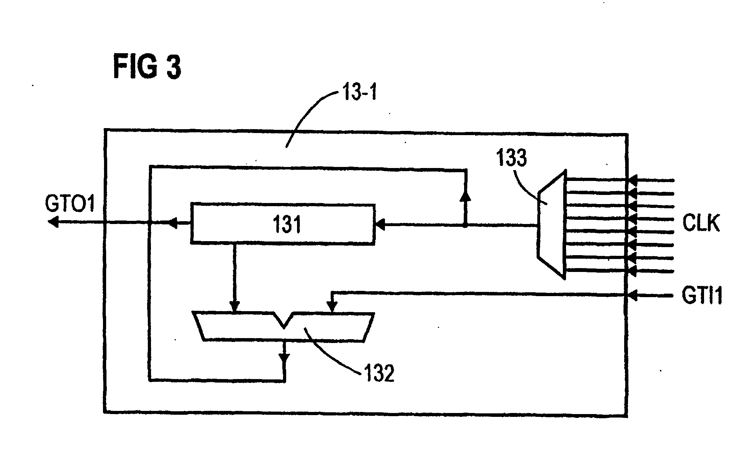

Der Aufbau, die Funktion und die Wirkungsweise der Steuer-Module 12 und globalen Zähler 13-1 und 13-2 werden nachfolgend unter Bezugnahme auf die Figuren 2 und 3 näher erläutert.

Der Aufbau eines einzelnen Steuer-Moduls 12 ist in Figur 2 gezeigt.

Wie aus der Figur 2 ersichtlich ist, weist das dort gezeigte Steuer-Modul 12 erste Ein- und/oder Ausgabeanschlüsse 121, zweite Ein- und/oder Ausgabeanschlüsse 122, dritte Einund/oder Ausgabeanschlüsse 123, und vierte Ein- und/oder Ausgabeanschlüsse 124 auf, wobei die ersten Ein- und/oder Ausgabeanschlüsse 121 zur Verbindung mit dem in der Steuer-Modul-Reihenschaltung vor dem betreffenden Steuer-Modul angeordneten Steuer-Modul dienen, die zweiten Ein- und/oder Ausgabeanschlüsse 122 zur Verbindung mit dem in der Steuer-Modul-Reihenschaltung nach dem betreffenden Steuer-Modul angeordneten Steuer-Modul dienen, die dritten Ein- und/oder Ausgabeanschlüsse 123 zu der über den ersten Bus 14 erfolgenden Verbindung mit den Ein- und/oder Ausgabeanschlüssen 11, den globalen Zählern 13-1 und 13-2 und der Einstelleinrichtung dienen, und die vierten Ein- und/oder Ausgabeanschlüsse 124 zu der über den zweiten Bus 15 erfolgenden Verbindung mit den globalen Zählern 13-1 und 13-2 dienen.

Die ersten und zweiten Ein- und/oder Ausgabeanschlüsse 121 und 122 umfassen im betrachteten Beispiel mit den Bezugszeichen M0i und M1i bezeichnete Eingabeanschlüsse und mit den Bezugszeichen M0o und M1o bezeichnete Ausgabeanschlüsse, wobei die Ausgabeanschlüsse M0o und M1o eines jeweiligen Steuer-Moduls mit den Eingabeanschlüssen M0i und M1i des jeweils nächsten Steuer-Moduls verbunden sind. Die dritten Ein- und/oder Ausgabeanschlüsse 123 umfassen im betrachteten Beispiel einen mit dem Bezugszeichen Data_Out bezeichneten Ausgabeanschluß und einen mit den Bezugszeichen Data_In bezeichneten Eingabeanschluß. Die vierten Ein- und/oder Ausgabeanschlüsse 124 umfassen im betrachteten Beispiel mit den Bezugszeichen GTO1 und GTO2 bezeichnete Eingabeanschlüsse. Die einzelnen Ein- und/oder Ausgabeanschlüsse sind, obgleich dies nicht explizit erwähnt ist, teilweise aus mehreren Einund/oder Ausgabeanschlüssen bestehende Ein- und/oder Ausgabeanschluß-Gruppen.

Die Steuer-Module 12 sind dazu ausgelegt, auf bestimmte interne und/oder externe Ereignisse in vorbestimmter Weise zu reagieren und die Reaktion repräsentierende Signale oder Daten über die zweiten Ein- und/oder Ausgabeanschlüsse 122 und/oder die dritten Ein- und/oder Ausgabeanschlüsse 123 auszugeben.

Wie vorstehend bereits erwähnt wurde, handelt es sich bei den Steuer-Modulen im betrachteten Beispiel um Multifunktions-Module, die entsprechend deren Ansteuerung durch die Einstelleinrichtung, verschiedenartig, im speziellen Fall wahlweise als Flankendetektor oder Vergleicher betreibbar sind.

Wie aus der Figur 2 ersichtlich ist, enthalten die Steuer-Module 12 jeweils einen Vergleicher 125, ein Register 126, eine Steuereinheit 127 und einen Multiplexer 128, welche wie gezeigt verschaltet sind.

Wie die jeweiligen Steuer-Module betrieben werden, d.h. ob als Flankendetektor oder als Vergleicher und gegebenenfalls auch wie die jeweiligen Steuer-Module auf bestimmte Ereignisse reagieren, wird den jeweiligen Steuer-Modulen von der Einstelleinrichtung über den ersten Bus 14 und einen oder mehrere der Eingabeanschlüsse Data In befohlen.

Bei Verwendung des Steuer-Moduls 12 als Flankendetektor werden durch die Steuereinheit 127 die steigende, die fallende oder beide Flanken des Signals, das der Steuereinrichtung über den dem betreffenden Steuer-Modul zugeordneten Einund/oder Ausgabeanschluß der Steuereinrichtung zugeführt wird, detektiert. Wenn in den genannten Signalen eine zu detektierende Flanke erfaßt wird, werden im betreffenden Steuer-Modul interne Vorgänge ausgelöst und/oder dieses Ereignis repräsentierende Signale oder Daten erzeugt und über die zweiten Ein- und/oder Ausgabeanschlüsse 122 und/oder über die dritten Ein- und/oder Ausgabeanschlüsse 123 ausgegeben. Die Reaktion auf das Erkennen einer Flanke kann insbesondere darin bestehen, daß der über den Eingangsanschluß GTO1 zugeführte Zählstand des ersten globalen Zählers 13-1 oder der über den Eingangsanschluß GTO2 zugeführte Zählstand des zweiten globalen Zählers 13-1 im Register 126 gespeichert wird; dies ist die sogenannte Capture-Funktion. Sofern die Steuer-Module und/oder die Steuereinrichtung programmgesteuert sind, kann zusätzlich oder alternativ vorgesehen werden, einen Interrupt oder ein sonstiges Software-Ereignis auszulösen.

Bei Verwendung des Steuer-Moduls 12 als Vergleicher werden unter Steuerung durch die Steuereinheit 127 zwei Werte, von welchen einer der im Register 126 gespeicherte Wert ist, und von welchen der andere der über den Eingangsanschluß GTO1 zugeführte Zählstand des ersten globalen Zählers 13-1 oder der über den Eingangsanschluß GTO2 zugeführte Zählstand des zweiten globalen Zählers 13-2 ist, auf Gleichheit überprüft. Wenn die verglichenen Werte gleich sind oder wenn dem betreffenden Steuer-Modul über den Eingangsanschluß GTO1 oder den GTO2 signalisiert wird, daß der Zählwert des zugeordneten globalen Zählers größer als oder gleich groß wie der Inhalt des Registers 126 ist, werden im betreffenden Steuer-Modul interne Vorgänge ausgelöst und/oder dieses Ereignis repräsentierende Signale oder Daten erzeugt und über die zweiten Ein- und/oder Ausgabeanschlüsse 122 und/oder über die dritten Ein- und/oder Ausgabeanschlüsse 123 ausgegeben. Sofern die Steuer-Module und/oder die Steuereinrichtung programmgesteuert sind, kann zusätzlich oder alternativ vorgesehen werden, einen Interrupt oder ein sonstiges Software-Ereignis auszulösen.

Im vorliegend betrachteten Beispiel verhalten sich die Steuer-Module im einzelnen wie folgt:
- Beim Auftreten eines Ereignisses, auf das es wie vorstehend angedeutet zu reagieren gilt, kann (außer bei der Capture-Funktion) am zugeordneten Ausgabeanschluß der Steuereinrichtung eine steigende oder fallende Flanke erzeugt werden oder der Zustand des über den zugeordneten Ausgabeanschluß der Steuereinrichtung ausgegebenen Signals invertiert werden oder dem nächsten Steuer-Modul über die Ausgabeanschlüsse M0o und/oder M1o ein entsprechendes Kommando übermittelt werden.
- Ein Steuer-Modul, das diese oder andere Kommandos über seine Eingangsanschlüsse M0i und/oder M1i empfängt, kann diese entweder selbst verarbeiten oder über die Ausgabeanschlüsse M0o und/oder M1o zum nächsten Steuer-Modul weiterleiten.
- Wenn ein Steuer-Modul über seine Eingabeanschlüsse M0i und/oder M1i ein Kommando empfängt und gleichzeitig auf ein selbst erfaßtes Ereignis reagieren muß, hat die im Ansprechen auf das betreffende Ereignis durchzuführende Reaktion in Konfliktfällen Vorrang vor der Ausführung und/oder Weiterleitung des empfangenen Kommandos.

Dadurch kann eine beliebige Anzahl von wunschgemäß auf definierte Ereignisse reagierenden Steuer-Modulen unter einseitiger oder gegenseitiger Einflußnahme wunschgemäß zusammenwirken und bestimmten Ein- und/oder Ausgabeanschlüssen der Steuereinrichtung zugeordnet werden. Ein derart flexible Konfigurierbarkeit ermöglicht es, die Steuereinrichtung für die unterschiedlichsten Aufgaben einzusetzen und sie dabei mit minimalem Aufwand jeweils optimal an die jeweiligen Verhältnisse anzupassen.

Dabei kann die Steuereinrichtung insbesondere aufgrund der Tatsache, daß bestimmte Komponenten der Steuereinrichtung, genauer gesagt Zähler und Größer/Gleich-Vergleicher global, d.h. für mehrere oder alle Steuer-Module verwendbar sind, relativ klein und einfach aufgebaut werden. Durch das Vorsehen eines oder mehrerer globaler Zähler und die Übermittlung der Zählstände derselben an die Steuer-Module kann nämlich auf das Vorsehen von Zählern in den Steuer-Modulen verzichtet werden, womit sich die Anzahl der vorzusehenden Zähler auf ein Minimum reduzieren. Entsprechendes gilt für das Vorsehen von globalen Größer/Gleich-Vergleichern, welche im vorliegenden Beispiel in den globalen Zählern integriert sind.

Der Aufbau eines der globalen Zähler ist in Figur 3 gezeigt.

Wie aus der Figur 3 ersichtlich ist, enthält der dort gezeigte globale Zähler 13-1 eine Zähleinheit 131, einen Größer/Gleich-Vergleicher 132 und einen Multiplexer 133 und ist über Eingangsanschlüsse GTI1 mit dem ersten Bus 14, über Eingangsanschlüsse CLK mit einem nicht gezeigten Taktsignal-Bus und über Ausgangsanschlüsse GTO1 mit dem zweiten Bus 15 verbunden.

Durch den Multiplexer 133 wird eines der mehreren Taktsignale ausgewählt und zur Zähleinheit 131 durchgeschaltet. Die Zähleinheit 131 zählt basierend auf dem an sie angelegten Taktsignal und gibt den jeweils aktuellen Zählstand zum Größer/Gleich-Vergleicher 132 und (über den Ausgangsanschluß GTO1 und den zweiten Bus 15) an die Steuer-Module 12 aus.

Eine in den Figuren nicht gezeigte Überwachungseinheit überwacht die über den ersten Bus 14 erfolgenden Datentransfers und stellt dabei insbesondere fest, ob in eines der Register 126 der als Vergleicher arbeitenden Steuer-Module 12 ein neuer Wert eingeschrieben wird. Das Beschreiben der Register 126 der als Vergleicher arbeitenden Steuer-Module 12 mit einem neuen Wert kann nur über den ersten Bus 14 erfolgen. Stellt die Überwachungseinheit fest, daß über den ersten Bus 14 zum Beschreiben eines Registers 126 bestimmte Daten übertragen werden, so liest sie diese Daten ein und führt sie dem Größer/Gleich-Vergleicher 132 zu. Der Größer/Gleich-Vergleicher 132 vergleicht diesen Wert mit dem ebenfalls an ihm anliegenden aktuellen Zählstand der Zähleinheit 131 und gibt das Vergleichsergebnis über die Ausgangsanschlüsse GTO1 und den zweiten Bus 15 an das Steuer-Modul aus, dessen Register 126 mit neuen Daten beschrieben werden soll bzw. wurde. Das betreffende Steuer-Modul überwacht das ihr zugeführte Vergleichsergebnis und reagiert bei Bedarf in der vorstehend bereits beschriebenen Art und Weise darauf.

Durch das Vorsehen eines oder mehrerer globaler Größer/Gleich-Vergleicher und deren Verwendung für mehrere oder alle Steuer-Module kann darauf verzichtet werden, jedes der Steuer-Module mit einem eigenen Größer/Gleich-Vergleicher auszustatten. Dies ist vorteilhaft, weil Größer/Gleich-Vergleicher eine beträchtliche Größe aufweisen und nur relativ aufwendig zu realisieren sind.

Daß nicht jedes Steuer-Modul über einen eigenen Größer/Gleich-Vergleicher verfügt, ist nicht nachteilig, weil der oder die globalen Größer/Gleich-Vergleicher nie mehrere Vergleiche gleichzeitig ausführen müssen. Der Größer/Gleich-Vergleicher wird ja schließlich nur benötigt, wenn ein Register 126 eines als Vergleicher eingesetzten Steuer-Moduls mit einem neuen Wert beschrieben wird, und dies kann ja nur sequentiell über den ersten Bus 14 erfolgen. Die bei Zählstandsänderungen durchzuführenden Vergleiche werden in den jeweiligen Steuer-Modulen zeitgleich durch die in diesen vorgesehenen Vergleicher 125 durchgeführt. Die Vergleicher 125 müssen die zu vergleichenden Werte nur auf Gleichheit überprüfen können. Solche Vergleicher sind vergleichsweise klein und einfach herstellbar und können folglich ohne weiteres in großer Anzahl vorgesehen werden.

Obgleich es derzeit als optimal angesehen wird, die Steuereinrichtung wie beschrieben oder ähnlich aufzubauen, ist diese in vielfacher Hinsicht variierbar.

So ist es beispielsweise nicht unbedingt erforderlich, daß es sich bei den Steuer-Modulen 12 um im wesentlichen identische Steuer-Module handelt; es kann sich auch nur teilweise um identische Steuer-Module oder gar um lauter verschiedene Steuer-Module handeln.

Sofern die Steuer-Module 12 wie vorliegend Multifunktions-Module sind, sind deren mögliche Funktionen nicht auf Vergleichs- und Flankendetektorfunktionen beschränkt; die Steuer-Module können dazu ausgelegt sein, zusätzlich oder alternativ beliebige andere Funktionen zu übernehmen.

Bei den Steuer-Modulen muß es sich aber nicht um Multifunktions-Module handeln, deren Funktion und Zusammenwirken individuell konfigurierbar ist. Es können statt dessen zumindest teilweise auch Steuer-Module zum Einsatz kommen, deren Funktion und Zusammenwirken unveränderlich festgelegt ist.

Die Steuer-Module müssen auch nicht in Reihe verschaltet sein; es kann auch vorgesehen werden, die Steuer-Module beliebig anders zu verschalten. Die Verbindungen zwischen den Steuer-Modulen müssen auch keine festen Verbindungen sein; es kann vorgesehen werden, die Verbindungen zwischen den Steuer-Modulen beispielsweise unter Steuerung durch die Einstelleinrichtung mehr oder weniger frei konfigurierbar zu machen, wodurch im Idealfall jedes Steuer-Modul auf beliebige Art und Weise mit beliebigen andern Steuer-Modulen verschaltbar ist.

Es wäre auch denkbar, die Steuereinrichtung beispielsweise durch Zünden entsprechender Fuses oder dergleichen dauerhaft wunschgemäß zu konfigurieren.

Ferner ist es selbstverständlich nicht erforderlich, daß die Anzahl der globalen Zähler genau zwei beträgt; es können grundsätzlich beliebig viele globale Zähler vorgesehen werden, wobei die globalen Zähler unabhängig voneinanander basierend auf den selben oder verschiedenen Taktsignalen zählen können.

Es ist ferner nicht erforderlich, daß die globalen Vergleicher in den globalen Zählern untergebracht sind, und daß die Anzahl der globalen Vergleicher gleich der Anzahl der globalen Zähler ist.

Es besteht auch keine Einschränkung darauf, daß der mindestens eine globale Vergleicher ein Größer/Gleich-Vergleicher ist; der mindestens eine globale Vergleicher kann grundsätzlich auch ein beliebiger anderer Vergleicher, insbesondere ein Größer-, Kleiner- oder Kleiner/Gleich-Vergleicher sein.

Unabhängig von den Einzelheiten der praktischen Realisierung der Steuereinrichtung läßt sich diese auf die beschriebene Art und Weise mit minimalem Aufwand auf maximale Leistungsfähigkeit bringen.

### Bezugszeichenliste

- 11: Ein- und/oder Ausgabeanschlüsse der Steuereinrichtung
- 12: Steuer-Modul
- 13-1: globaler Zähler
- 13-2: globaler Zähler
- 14: erster Bus
- 15: zweiter Bus

- 121: erste Ein- und/oder Ausgabeanschlüsse der Steuer-Module
- 122: zweite Ein- und/oder Ausgabeanschlüsse der Steuer-Module
- 123: dritte Ein- und/oder Ausgabeanschlüsse der Steuer-Module
- 124: vierte Ein- und/oder Ausgabeanschlüsse der Steuer-Module
- 125: Vergleicher
- 126: Register
- 127: Steuereinheit
- 128: Multiplexer

- 131: Zähleinheit
- 132: Vergleicher
- 133: Multiplexer

## Patentansprüche

1. Elektrische Steuereinrichtung zur Erzeugung von Steuersignalen für die Ansteuerung elektrischer Einrichtungen, mit einer Vielzahl von Steuer-Modulen (12), welche zumindest teilweise einen Vergleicher (125) zum Vergleich zweier Werte aufweisen und abhängig von den jeweiligen Vergleichsergebnissen arbeiten,
**dadurch gekennzeichnet,**
**daß** für bestimmte Vergleiche ein oder mehrere, jeweils für mehrere oder alle Steuer-Module (12) arbeitende globale Vergleicher (132) vorgesehen sind, und daß die Steuer-Module (12) dazu ausgelegt sind, zusätzlich in Abhängigkeit von den Vergleichsergebnissen des mindestens einen globalen Vergleichers zu arbeiten.

2. Elektrische Steuereinrichtung nach Anspruch 1,
**dadurch gekennzeichnet,**
**daß** die Vergleicher (125, 132) jeweils dazu ausgelegt sind, den Zählstand eines Zählers (13-1, 13-2) mit einem variabel festlegbaren Wert zu vergleichen.

3. Elektrische Steuereinrichtung nach Anspruch 2,
**dadurch gekennzeichnet,**
**daß** die den Vergleichen zugrundezulegenden Zählstände von einem oder mehreren, jeweils für mehrere oder alle Steuer-Module (12) arbeitenden Zählern (13-1, 13-2) stammen.

4. Elektrische Steuereinrichtung nach Anspruch 3,
**dadurch gekennzeichnet,**
**daß** die globalen Vergleicher (132) Bestandteil der für mehrere oder alle Steuer-Module (12) arbeitenden Zähler (13-1, 13-2) sind.

5. Elektrische Steuereinrichtung nach einem der Ansprüche 2 bis 4,
**dadurch gekennzeichnet,**
**daß** die in den Steuer-Modulen (12) vorgesehenen Vergleicher (125) dazu ausgelegt sind, im Ansprechen auf eine Veränderung des dem Vergleich zugrundezulegenden Zählstandes zu überprüfen, ob der neue Zählstand gleich dem variabel festlegbaren Wert ist.

6. Elektrische Steuereinrichtung nach einem der Ansprüche 2 bis 5,
**dadurch gekennzeichnet,**
**daß** der mindestens eine globale Vergleicher (132) dazu ausgelegt ist, im Ansprechen auf eine Veränderung des variabel festlegbaren Wertes den veränderten Wert mit dem aktuellen Zählstand zu vergleichen, der dem betreffenden Steuer-Modul (12) zugeordnet ist.

7. Elektrische Steuereinrichtung nach einem der vorhergehenden Ansprüche,
**dadurch gekennzeichnet,**
**daß** der mindestens eine globale Vergleicher (132) dazu ausgelegt ist, einen Größer-, Größer/Gleich- Kleiner-, oder Kleiner/Gleich-Vergleich durchzuführen.

8. Elektrische Steuereinrichtung nach einem der vorhergehenden Ansprüche,
**dadurch gekennzeichnet,**
**daß** die Steuer-Module (12) einen im wesentlichen identischen Aufbau aufweisen

9. Elektrische Steuereinrichtung nach einem der vorhergehenden Ansprüche,
**dadurch gekennzeichnet,**
**daß** die Steuer-Module (12) Multifunktions-Module sind, die unabhängig voneinander wahlweise in einer von mehreren Betriebsarten arbeiten können.

10. Elektrische Steuereinrichtung nach Anspruch 9,
**dadurch gekennzeichnet,**
**daß** die Steuer-Module (12) als Vergleicher verwendbar sind.

11. Elektrische Steuereinrichtung nach Anspruch 10,
**dadurch gekennzeichnet,**
**daß** die Steuer-Module (12) als Flankendetektor verwendbar sind.

12. Elektrische Steuereinrichtung nach Anspruch 10,
**dadurch gekennzeichnet,**
**daß** die Steuer-Module (12) als Capture-Einheit verwendbar sind.

13. Elektrische Steuereinrichtung nach einem der vorhergehenden Ansprüche,
**dadurch gekennzeichnet,**
**daß** selektiv einstellbar ist, ob und gegebenenfalls welche Steuer-Module (12) wie zusammenwirken.

14. Elektrische Steuereinrichtung nach einem der vorhergehenden Ansprüche,
**dadurch gekennzeichnet,**
**daß** selektiv einstellbar ist, welche Steuer-Module (12) mit welchen Ein- und/oder Ausgabeanschlüssen (11) der Steuereinrichtung verbunden sind.

## Claims

1. Electric control device for generating control signals for driving electrical equipment, having a large number of control modules (12) which, at least to some extent, have a comparator (125) for comparing the two values and operate on the basis of the respective comparison results, **characterized in that** for specific comparisons, one or more global comparators (132) are provided, in each case operating for a plurality of or all control modules (12), and **in that** the control modules (12) are designed to operate additionally on the basis of the comparison results of the at least one global comparator.

2. Electric control device according to Claim 1, **characterized in that** the comparators (125, 132) are in each case designed to compare the counter reading of a counter (13-1, 13-2) with a variably definable value.

3. Electric control device according to Claim 2, **characterized in that** the counter readings on which the comparisons are based originate from one or more counters (13-1, 13-2) in each case operating for a plurality of or all the control modules (12).

4. Electric control device according to Claim 3, **characterized in that** the global comparators (132) are a constituent part of the counters (13-1, 13-2) operating for a plurality of or all the control modules (12).

5. Electric control device according to one of Claims 2 to 4, **characterized in that**, in response to a change in the counter reading on which the comparison is based, the comparators (125) provided in the control modules (12) are designed to check whether the new counter reading is equal to the variably definable value.

6. Electric control device according to one of Claims 2 to 5, **characterized in that**, in response to a change in the variably definable value, the at least one global comparator (132) is designed to compare the changed value with the current counter reading which is associated with the relevant control module (12).

7. Electric control device according to one of the preceding claims, **characterized in that** the at least one global comparator (132) is designed to carry out a greater than, greater than/equal to, less than or less than/equal to comparison.

8. Electric control device according to one of the preceding claims, **characterized in that** the control modules (12) have a substantial identical construction.

9. Electric control device according to one of the preceding claims, **characterized in that** the control modules (12) are multifunctional modules which, independently of one another, can operate optionally in one of a plurality of operating modes.

10. Electric control device according to Claim 9, **characterized in that** the control modules (12) can be used as comparators.

11. Electric control device according to Claim 10, **characterized in that** the control modules (12) can be used as edge detectors.

12. Electric control device according to Claim 10, **characterized in that** the control modules (12) can be used as a capture unit.

13. Electric control device according to one of the preceding claims, **characterized in that** it is possible to set selectively whether and possibly which control modules (12) interact and how.

14. Electric control device according to one of the preceding claims, **characterized in that** it is possible to set selectively which control modules (12) are connected to which input and/or output terminals (11) of the control device.

## Revendications

1. Dispositif de commande électrique destiné à produire des signaux de commande pour la commande de dispositifs électriques, comprenant une pluralité de modules de commande (12) qui présentent au moins partiellement un comparateur (125) pour comparer deux valeurs et fonctionnent en fonction des résultats des comparaisons correspondantes, **caractérisé en ce qu'**un ou plusieurs comparateurs (132) fonctionnant de manière globale sont à chaque fois prévus pour plusieurs ou pour tous les modules de commande (12), et que les modules de commandes (12) sont conçus pour fonctionner en plus en fonction des résultats de la comparaison de l'au moins un comparateur global.

2. Dispositif de commande électrique selon la revendication 1, **caractérisé en ce que** les comparateurs (125, 132) sont à chaque fois conçus pour comparer l'état de comptage d'un compteur (13-1, 13-2) avec une valeur pouvant être définie de manière variable.

3. Dispositif de commande électrique selon la revendication 2, **caractérisé en ce que** les états de comptage sur lesquels se base la comparaison sont issus d'un ou de plusieurs compteurs (13-1, 13-2) qui fonctionnent à chaque fois pour plusieurs ou pour tous les modules de commande (12).

4. Dispositif de commande électrique selon la revendication 3, **caractérisé en ce que** les comparateurs globaux (132) font partie intégrante des compteurs (13-1, 13-2) qui fonctionnent pour plusieurs ou pour tous les modules de commande (12).

5. Dispositif de commande électrique selon l'une des revendications 2 à 4, **caractérisé en ce que** les comparateurs (125) prévus dans les modules de commande (12) sont conçus pour vérifier, en réaction à une modification de l'état de comptage sur lequel se base la comparaison, si le nouvel état de comptage est égal à la valeur pouvant être définie de manière variable.

6. Dispositif de commande électrique selon l'une des revendications 2 à 5, **caractérisé en ce qu'**au moins un comparateur global (132) est conçu pour comparer, en réaction à une modification de la valeur pouvant être définie de manière variable, la valeur modifiée avec l'état de comptage actuel qui est affecté au module de commande (12) concerné.

7. Dispositif de commande électrique selon l'une des revendications précédentes, **caractérisé en ce que** l'au moins un comparateur global (132) est conçu pour effectuer une comparaison de supériorité, de supériorité / égalité, d'infériorité ou d'infériorité / égalité.

8. Dispositif de commande électrique selon l'une des revendications précédentes, **caractérisé en ce que** les modules de commande (12) présentent une constitution pour l'essentiel identique.

9. Dispositif de commande électrique selon l'une des revendications précédentes, **caractérisé en ce que** les modules de commande (12) sont des modules multifonctions qui peuvent fonctionner indépendamment les uns des autres dans un ou plusieurs modes de fonctionnement au choix.

10. Dispositif de commande électrique selon la revendication 9, **caractérisé en ce que** les modules de commande (12) peuvent être utilisés en tant que comparateurs.

11. Dispositif de commande électrique selon la revendication 10, **caractérisé en ce que** les modules de commande (12) peuvent être utilisés en tant que détecteurs de front.

12. Dispositif de commande électrique selon la revendication 10, **caractérisé en ce que** les modules de commande (12) peuvent être utilisés en tant qu'unité de capture.

13. Dispositif de commande électrique selon l'une des revendications précédentes, **caractérisé en ce qu'**il est possible de définir de manière sélective si et éventuellement quels modules de commande (12) interagissent, et comment ils interagissent.

14. Dispositif de commande électrique selon l'une des revendications précédentes, **caractérisé en ce qu'**il est possible de définir de manière sélective quels modules de commande (12) sont reliés avec quelles bornes d'entrée et/ou de sortie (11) du dispositif de commande.
